(19) Europäisches Patentamt / European Patent Office / Office européen des brevets

(11) **EP 2 788 458 B1**

(12) **FASCICULE DE BREVET EUROPEEN**

(45) Date de publication et mention de la délivrance du brevet:
**09.09.2015 Bulletin 2015/37**

(21) Numéro de dépôt: **12799240.2**

(22) Date de dépôt: **08.11.2012**

(51) Int Cl.:
*C10G 65/04* *(2006.01)*    *C10G 65/12* *(2006.01)*
*C10L 1/08* *(2006.01)*

(86) Numéro de dépôt international:
**PCT/FR2012/000446**

(87) Numéro de publication internationale:
**WO 2013/083883 (13.06.2013 Gazette 2013/24)**

(54) **PROCEDE D'HYDROCONVERSION DE CHARGES PETROLIERES EN LITS FIXES POUR LA PRODUCTION DE FIOULS A BASSE TENEUR EN SOUFRE**

VERFAHREN ZUR HYDROKONVERION VON ERDÖLEINSÄTZEN IN FESTEN BETTEN ZUR ERZEUGUNG VON BRENNSTOFFÖLEN MIT NIEDRIGEM SCHWEFELGEHALT

METHOD FOR THE HYDROCONVERSION OF PETROLEUM FEEDSTOCKS IN FIXED BEDS FOR THE PRODUCTION OF FUEL OILS HAVING A LOW SULPHUR CONTENT

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **07.12.2011 FR 1103758**

(43) Date de publication de la demande:
**15.10.2014 Bulletin 2014/42**

(73) Titulaire: **IFP Energies nouvelles**
**92852 Rueil-Malmaison Cedex (FR)**

(72) Inventeurs:
• **WEISS, Wilfried**
  **F-38540 Valencin (FR)**
• **GUIBARD, Isabelle**
  **F-69360 St Symphorien D'ozon (FR)**
• **DASTILLUNG, Réjane**
  **F-69005 Lyon (FR)**

(56) Documents cités:
**FR-A1- 2 782 728    FR-A1- 2 784 687**
**FR-A1- 2 950 072**

**Description**

La présente invention concerne le raffinage et la conversion des fractions lourdes d'hydrocarbures contenant entre autre des impuretés soufrées. Elle concerne plus particulièrement un procédé de conversion de charges lourdes pétrolières pour la production de bases de fiouls de type distillat sous vide, résidu atmosphérique et résidu sous vide, notamment de bases de fiouls de soute, à basse teneur en soufre. Le procédé selon l'invention permet également de produire des distillats atmosphériques (naphta, kérosène et diesel), des distillats sous vide et des gaz légers (C1 à C4).

Alors que l'industrie terrestre était soumise à une réglementation sévère sur les teneurs en soufre contenues dans les bases carburants (essence, diesel) lors des dernières décades, la teneur en soufre dans les combustibles marins n'était jusqu'à présent peu contraignante. En effet, les combustibles actuellement sur le marché contiennent jusqu'à 4,5 % poids de soufre. Il en résulte, que les navires sont devenus la principale source d'émission de dioxyde de soufre ($SO_2$).

Afin de baisser ses émissions, l'Organisation Maritime Internationale a soumise des recommandations en termes de spécifications concernant les combustibles marins. Ces recommandations sont déclinées dans la version 2010 de la norme ISO 8217 (Annexe VI de la convention MARPOL). La spécification concernant le soufre s'attache désormais aux émissions de $SO_x$ et se traduit par une recommandation en teneur en soufre équivalente à inférieure ou égale à 0.5% poids pour le futur. Une autre recommandation très contraignante est la teneur en sédiments après vieillissement selon ISO 10307-2 qui doit être inférieure ou égale à 0.1% pds. De même, la viscosité doit être inférieure ou égale à 380 cSt (50°C).

La présente invention permet de produire des bases de fiouls, notamment des bases de fiouls de soute, respectant les recommandations de la convention MARPOL. La présente invention permet également d'obtenir des bases carburants.

Des procédés de conversion de charges pétrolières en lit fixe comprenant une première étape d'hydrodémétallation (HDM) puis une étape d'hydrocraquage (HCK), puis une étape d'hydrodésulfuration (HDS) sont connus dans l'état de la technique.

La demande EP1600491 décrit un procédé de conversion de pétrole brut ou de pétrole brut étêté comprenant une première étape d'HDM en lit fixe, puis une étape d'HCK, puis une étape d'HDS visant à produire des bases carburants (kérosène et diesel) de faible teneur en soufre.

La demande FR2950072 décrit également un procédé de conversion de pétrole brut ou de pétrole brut étêté comprenant une première étape d'HDM en lit fixe, puis une étape d'HCK, puis une étape d'HDS. Ce procédé comprend un ou plusieurs systèmes de réacteurs permutables.

Aucune de ces demandes ne décrit la production d'un fioul lourd répondant aux nouvelles recommandations.

La présente invention adapte et améliore les procédés de conversion décrits dans l'état de la technique pour la production de bases de fiouls à basse teneur en soufre notamment, mais aussi pour la production de distillats atmosphériques et/ou de distillats sous vide.

Plus particulièrement, l'invention concerne un procédé de conversion d'une charge hydrocarbonée ayant une teneur en soufre d'au moins 0,1 % poids, une température initiale d'ébullition d'au moins 300°C et une température finale d'ébullition d'au moins 440°C dans lequel :

a) ladite charge est soumise à un traitement d'hydrodémétallation dans une section d'hydrodémétallation (HDM) en lit fixe comprenant une ou plusieurs zones d'hydrodémétallation en lits fixes précédées d'au moins deux zones de garde d'hydrodémétallation également en lits fixes, disposées en série pour être utilisées de façon cyclique consistant en la répétition successive des étapes a") et a"') définies ci-après :

a') une étape, dans laquelle les zones de garde sont utilisées toutes ensembles pendant une durée au plus égale au temps de désactivation et/ou de colmatage de l'une d'entre elles,
a") une étape, durant laquelle la zone de garde désactivée et/ou colmatée est court-circuitée et le catalyseur qu'elle contient est régénéré et/ou remplacé par du catalyseur frais, et durant laquelle la ou les autres zone(s) de garde sont utilisée(s), et
a"') une étape, durant laquelle les zones de garde sont utilisées toutes ensembles, la zone de garde dont le catalyseur a été régénéré au cours de l'étape précédente étant reconnectée et ladite étape étant poursuivie pendant une durée au plus égale au temps de désactivation et/ou de colmatage de l'une des zones de garde,

b) au moins une partie de l'effluent au moins en partie démétallisé est hydrocraquée dans une section d'hydrocraquage (HCK) contenant au moins un catalyseur d'hydrocraquage en lit fixe,
c) au moins une partie de l'effluent au moins en partie hydrocraqué est soumise à un fractionnement permettant d'obtenir une fraction légère et une fraction lourde,
d) au moins une partie de ladite fraction lourde est hydrodésulfurée dans une section d'hydrodésulfuration (HDS) contenant au moins un catalyseur d'hydrodésulfuration en lit fixe, et dans laquelle on réinjecte de l'hydrogène.

La première étape comprend l'HDM de la charge en lit fixe. L'objectif principal de l'HDM est de réduire sensiblement la teneur en métaux, mais aussi une première partie du soufre et d'autres impuretés. L'HDM est généralement effectuée avant une étape d'HDS ultérieure afin de protéger les catalyseurs d'HDS sensibles aux métaux. La section d'HDM comprend des zones de garde d'hydrodémétallation (ou réacteurs permutables) qui permettent d'augmenter le cycle d'opération.

L'effluent obtenu dans l'étape d'HDM est ensuite soumis à une étape d'HCK en lit fixe permettant de transformer la charge en coupes plus légères et notamment en distillats recherchés (naphta, kérosène et diesel). Cette étape permet donc de produire les bases carburants recherchées.

Une des étapes clé du procédé consiste à effectuer un fractionnement entre l'étape d'HCK et l'étape d'HDS afin de séparer les fractions plus légères (naphta, gazole, mais aussi les gaz tels que $NH_3$, $H_2S$, C1 à C4) de la fraction lourde. L'étape de séparation permet ainsi de minimiser la fraction à désulfurer dans le lit fixe. De cette façon, le dimensionnement de la section d'HDS peut être moins important. De même, on évite le surcraquage des fractions légères et donc une perte de rendement en bases carburants.

L'étape de fractionnement permet également de séparer le $H_2S$ contenu dans la fraction légère. L'élimination du $H_2S$ est avantageuse afin de minimiser sa concentration (et donc de minimiser la pression partielle de l'$H_2S$) dans la section d'HDS. En effet, une trop grande concentration d'$H_2S$ peut avoir un effet inhibiteur sur les catalyseurs d'HDS.

Pour atteindre la teneur en soufre dans la fraction lourde inférieure ou égale à 0,5 % poids, l'HDS doit être poussée. En effet, les composés soufrés présents dans la charge hydrocarbonée sont généralement concentrés dans les gammes d'ébullition plus élevées. La fraction lourde est ainsi réfractaire à l'HDS d'autant plus qu'elle a subi une étape d'hydrocraquage la rendant encore plus réfractaire.

Afin de faciliter l'HDS, il faut travailler à forte pression partielle d'hydrogène (pp$H_2$) (c'est à dire à plus forte concentration d'hydrogène dans le gaz) ce qui possible via l'étape de fractionnement en amont qui élimine les composés légers (le gazole, le kérosène, le naphta et les gaz tels que $NH_3$, $H_2S$, C1 à C4, mais aussi l'hydrogène) et évite la dilution de l'$H_2$ dans l'étape d'HDS. Pour augmenter cette pression partielle, l'hydrogène est réinjecté après le fractionnement avec la fraction lourde dans l'étape d'HDS. On obtient ainsi des bases de fiouls suffisamment désulfurées pour répondre aux recommandations.

Selon une variante du procédé, l'effluent obtenu après l'HDS peut être soumise à une étape de séparation (étape e) à partir de laquelle on récupère habituellement au moins une fraction de bases carburants (naphta, kérosène, gazole) et des fractions lourdes telles que le distillat sous vide, le résidu sous vide ou le résidu atmosphérique qui constituent les bases de fiouls.

Les bases de fiouls produites par le procédé selon l'invention ont une teneur en soufre inférieure ou égale à 0.5% poids. De plus, si la base de fioul est constituée du distillat sous vide issu du procédé, la teneur en soufre peut être proche de 0.1% poids.

Selon une variante du procédé, une partie d'au moins une des fractions lourdes obtenues pas le présent procédé peut être envoyée dans une section de craquage catalytique (étape f) dans laquelle elle est traitée dans des conditions permettant de produire entre autre une huile de coupe légère (LCO ou "light cycle oil" selon la terminologie anglo-saxonne) et une huile de coupe lourde (HCO ou "heavy cycle oil" selon la terminologie anglo-saxonne). Ces huiles peuvent être utilisées comme fluxant pour être mélangées avec les bases de fiouls issues du procédé selon l'invention pour constituer le fioul de manière à atteindre la viscosité ciblée.

**Description détaillée**

**La charge**

Les charges traitées dans le procédé selon l'invention sont avantageusement choisies parmi les résidus atmosphériques, les résidus sous vide issus de distillation directe, des pétroles bruts, des pétroles bruts étêtés, les huiles désasphaltées, les résidus issus des procédés de conversion tels que par exemple ceux provenant de la cokéfaction, d'une hydroconversion en lit fixe, en lit bouillonnant, ou encore en lit mobile, les huiles lourdes de toute origine et en particulier issues de sables ou schistes bitumineux, des sables bitumineux ou leurs dérivés, des schistes bitumineux ou leurs dérivés, seules ou en mélange.

Les charges ont généralement une teneur en soufre d'au moins 0,1 % poids, souvent d'au moins 1% et très souvent d'au moins 2%, voire 4 % ou même 7 % en poids. Les charges ont généralement une température initiale d'ébullition d'au moins 300°C et une température finale d'ébullition d'au moins 440°C, de préférence d'au moins 500°C.

Selon la présente invention, les charges que l'on traite sont de préférence des résidus atmosphériques ou des résidus sous vide, ou des mélanges de ces résidus.

Ces charges peuvent avantageusement être utilisées telles quelles ou encore diluées par une co-charge hydrocarbonée ou un mélange de co-charges hydrocarbonées. La co-charge introduite avec la charge peut être choisie parmi des fractions gazole ou distillat sous vide issues de distillation ou de procédé de conversion tel qu'un procédé de craquage catalytique, de viscoréduction, ou de cokéfaction. Ces co-charges peuvent aussi être choisies parmi les produits issus d'un procédé de craquage catalytique en lit fluidisé : une huile de coupe légère (LCO), une huile de coupe lourde (HCO), une huile décantée ou un résidu de craquage catalytique en lit fluidisé.

Les co-charges peuvent aussi avantageusement comprendre des coupes issues du procédé de liquéfaction du charbon ou de la biomasse, des extraits aromatiques, ou toutes autres coupes hydrocarbonées ou encore des charges non pétrolières telles que des dérivés gazeux et/ou liquides (ne contenant pas ou peu de solides) de la conversion thermique (avec ou sans catalyseur et avec ou sans hydrogène) du charbon, de la biomasse comme de l'huile de pyrolyse ou des déchets industriels (comme par exemple les polymères recyclés) ou encore des huiles végétales, d'algues ou animales.

Les co-charges peuvent être introduites seules ou en mélange.

**L'étape d'hydrodémétallation (HDM) (étape a)**

La charge est soumise selon la présente invention à une étape d'HDM comprenant une ou plusieurs zones d'HDM en lits fixes précédées d'au moins deux zones de garde (ou réacteurs permutables) d'HDM également en lits fixes.

L'étape d'hydrodémétallation peut avantageusement être mise en oeuvre à une température comprise entre 300 et 500°C, de préférence entre 350°C et 420°C et sous une pression absolue comprise entre 2 MPa et 35 MPa, de préférence entre 10 et 20 MPa. La température est habituellement ajustée en fonction du niveau souhaité d'hydrodémétallation. Le plus souvent la WH se situe dans une gamme allant de $0,1\ h^{-1}$ à $5\ h^{-1}$, et de préférence de $0,1\ h^{-1}$ à $2\ h^{-1}$. La quantité d'hydrogène mélangée à la charge est habituellement de 100 à 5000 normaux mètres cube ($Nm^3$) par mètre cube ($m^3$) de charge liquide, le plus souvent de 200 à 2000 $Nm^3/m^3$ et de préférence de 300 à 1500 $Nm^3/m^3$. Habituellement, l'étape d'hydrodémétallation est effectuée industriellement dans un ou plusieurs réacteurs à courant descendant de liquide.

Pour le procédé selon la présente invention, on utilise le plus souvent des catalyseurs spécifiques adaptés à chaque étape.

Pour réaliser l'HDM, le catalyseur idéal doit être apte à traiter les asphaltènes de la charge, tout en ayant un haut pouvoir démétallant associé à une haute capacité de rétention en métaux et une grande résistance au cokage.

Les catalyseurs d'HDM sont avantageusement des catalyseurs comprenant au moins un métal choisi dans le groupe formé par les métaux des groupes VIII (de préférence le nickel et/ou le cobalt) et VIB (de préférence du molybdène et/ou du tungstène), pris seuls ou en mélange, sur un oxyde réfractaire poreux comme support, ledit support étant généralement choisi dans le groupe formé par l'alumine, la silice, les silices-alumines, la magnésie, les argiles et les mélanges d'au moins deux de ces minéraux.

La phase active initiale du catalyseur placé dans l'étape d'HDM est généralement constitué de nickel et de molybdène. Cette phase active connue pour être plus hydrogénante qu'une phase constituée de cobalt et de molybdène permet de limiter la formation de coke dans la porosité et ainsi la désactivation. De préférence, le catalyseur d'HDM comprend au moins un élément dopant déposé sur ledit catalyseur et choisi dans le groupe formé par le phosphore, le bore et le silicium.

Des catalyseurs utilisables dans l'étape d'HDM sont par exemple indiqués dans les brevets EP113297, EP113284, US5221656, US5827421, US7119045, US5622616 et US5089463. On utilise de préférence des catalyseurs d'HDM dans les réacteurs permutables.

On peut également utiliser un catalyseur mixte étant actif en HDM et en HDS à la fois pour la section HDM et pour la section HDS tel que décrit dans le brevet FR2940143. Préalablement à l'injection de la charge, les catalyseurs utilisés dans le procédé selon la présente invention sont de préférence soumis à un traitement de sulfuration (in-situ ou ex-situ).

L'homme du métier comprend aisément que dans l'étape d'HDM, on effectue majoritairement des réactions d'HDM mais parallèlement aussi une partie des réactions d'HDS accompagnées de réactions d'hydrodésazotation (HDN), d'hydrogénation, d'hydrodéoxygénation, d'hydrodéaromatisation, d'hydroisomérisation, d'hydrodéalkylation, d'hydrocraquage, d'hydrodéasphaltage et de la réduction du carbone Conradson. De même, dans l'étape d'HDS, on effectue majoritairement des réactions d'HDS accompagnées des réactions citées en-dessus. Cela vaut également pour l'hydrocraquage dans lequel on effectue majoritairement des réactions d'HCK, accompagnées des réactions citées en-dessus.

Selon l'invention, l'étape d'hydrodémétallation en lit fixe utilise un système de réacteurs permutables (ou zones de garde) en amont des réacteurs principaux d'hydrotraitement. Plus particulièrement, l'étape d'hydrodémétallation comprend une ou plusieurs zones d'hydrodémétallation en lits fixes précédées d'au moins deux zones de garde d'hydrodémétallation également en lits fixes, disposées en série pour être utilisées de façon cyclique consistant en la répétition successive des étapes a") et a"') définies ci-après :

a') une étape, dans laquelle les zones de garde sont utilisées toutes ensembles pendant une durée au plus égale au temps de désactivation et/ou de colmatage de l'une d'entre elles,

a") une étape, durant laquelle la zone de garde désactivée et/ou colmatée est court-circuitée et le catalyseur qu'elle contient est régénéré et/ou remplacé par du catalyseur frais, et durant laquelle la ou les autres zone(s) de garde sont utilisée(s), et

a''') une étape, durant laquelle les zones de garde sont utilisées toutes ensembles, la zone de garde dont le catalyseur a été régénéré et/ou remplacé au cours de l'étape précédente étant reconnectée et ladite étape étant poursuivie pendant une durée au plus égale au temps de désactivation et/ou de colmatage de l'une des zones de garde.

De préférence, après la régénération et/ou le remplacement du catalyseur d'un réacteur, ce réacteur est reconnecté en aval du réacteur en marche.

Le système des réacteurs permutables est connu des brevets FR2681871, FR2784687 et EP1343857. La fonction des réacteurs permutables est de protéger les réacteurs principaux d'hydrotraitement en aval en évitant ou en retardant le colmatage et/ou la désactivation dans ces réacteurs. En effet, un problème rencontré lors de l'utilisation de lits fixes est le colmatage qui se produit à cause des asphaltènes et sédiments contenus dans la charge. Un autre problème est la désactivation du catalyseur en raison de l'important dépôt de métaux qui se produit lors des réactions d'hydrotraitement. Les réacteurs permutables sont ainsi utilisés pour augmenter le cycle d'opération de l'unité en permettant pendant un certain temps le remplacement du catalyseur désactivé et/ou colmaté uniquement dans les réacteurs permutables fonctionnant de manière cyclique sans arrêter l'unité entière.

Le temps de désactivation et/ou de colmatage varie en fonction de la charge, des conditions opératoires de l'étape d'hydrodémétallation et du ou des catalyseurs utilisés. Il s'exprime d'une manière générale par une chute de la performance catalytique (une augmentation de la concentration de métaux et/ou d'autres impuretés dans l'effluent), une augmentation de la température nécessaire pour le maintien d'une activité du catalyseur ou, dans le cas spécifique d'un colmatage, par une augmentation significative de la perte de charge. La perte de charge $\Delta p$, exprimant un degré de colmatage, est mesurée en permanence durant tout le cycle sur chacune des zones et peut se définir par une augmentation de pression résultant du passage partiellement bloqué de l'écoulement au travers de la zone. De même, la température est mesurée en permanence durant tout le cycle sur chacune des deux zones.

Afin de définir un temps de désactivation et/ou de colmatage, l'Homme du métier définit au préalable une valeur maximalement tolérable de la perte de charge $\Delta p$ et/ou de la température en fonction de la charge à traiter, des conditions opératoires et catalyseurs choisis, et à partir de laquelle il faut procéder à la déconnection de la zone de garde. Le temps de désactivation et/ou de colmatage se définit ainsi comme le temps où la valeur limite de la perte de charge et/ou de la température est atteinte. Dans le cas d'un procédé d'hydrotraitement de fractions lourdes, la valeur limite de la perte de charge se situe généralement entre 0,3 et 1 MPa (3 et 10 bars), de préférence entre 0,5 et 0,8 MPa (5 et 8 bars). La valeur limite de la température se situe généralement entre 400°C et 430°C, la température correspondant, ici et dans la suite du texte, à la température moyenne mesurée du lit catalytique.

Les conditions opératoires des réacteurs permutables sont généralement identiques à celles des réacteurs d'hydrotraitement principaux. La valeur de la WH de chaque réacteur permutable en fonctionnement est de préférence de 0,25 à 4 h$^{-1}$ et le plus souvent de 1 à 2 h$^{-1}$. La valeur de WH globale des réacteurs permutables et celle de chaque réacteur est choisie de manière à réaliser le maximum d'HDM tout en contrôlant la température de réaction (limitation de l'exothermicité).

Dans une forme préférée de réalisation on utilise une section de conditionnement du catalyseur permettant la permutation en marche de ces zones de garde, c'est-à-dire sans arrêter le fonctionnement de l'unité : tout d'abord, un système qui fonctionne à pression modérée (de 1 MPa à 5 MPa, de préférence de 1,5 MPa à 2,5 MPa) permet d'assurer les opérations suivantes sur le réacteur de garde déconnecté : lavage, strippage, refroidissement, avant déchargement du catalyseur usé ; puis chauffage et sulfuration après chargement du catalyseur frais ; ensuite un autre système de pressurisation/dépressurisation et de robinets-vannes de technologie appropriée permet effectivement de permuter ces zones de garde sans arrêter l'unité, c'est-à-dire sans affecter le facteur opératoire, puisque toutes les opérations de lavage, strippage, déchargement du catalyseur usé, rechargement du catalyseur frais, chauffage, sulfuration se font sur le réacteur ou zone de garde déconnecté. Alternativement, un catalyseur pré-sulfuré peut être utilisé dans la section de conditionnement de manière à simplifier la procédure de permutation en marche. L'effluent sortant des réacteurs permutables est ensuite envoyé dans les réacteurs d'hydrotraitement principaux.

Selon une autre variante, la charge traverse à l'entrée de chaque zone de garde un plateau filtrant situé en amont du ou des lit(s) catalytique(s) contenu dans la zone de garde. Ce plateau filtrant, décrit dans le brevet FR2889973, permet de piéger les particules colmatantes contenues dans la charge au moyen d'un plateau distributeur spécifique comportant un milieu filtrant.

Selon encore une autre variante, le plateau filtrant peut être installé à l'entrée de chacune des zones d'HDM, d'HCK et d'HDS.

D'une manière générale, chaque zone d'HDM, d'HCK ou d'HDS ou zone de garde contient au moins un lit catalytique (par exemple 1, 2, 3, 4, ou 5 lits catalytiques). De préférence, chaque zone de garde contient un lit catalytique. Chaque lit catalytique contient au moins une couche catalytique contenant un ou plusieurs catalyseurs, éventuellement précédé par au moins une couche inerte, par exemple de l'alumine ou de la céramique sous forme d'extrudés, de billes ou de pastilles. Les catalyseurs utilisés dans le ou les lit(s) catalytique(s) peuvent être identiques ou différents.

**L'étape d'hydrocraquage (HCK) (étape b)**

Selon l'invention, au moins une partie et de préférence la totalité de l'effluent au moins en partie démétallisé, est hydrocraquée dans une section d'HCK contenant au moins un catalyseur d'HCK.

Selon une variante préférée, l'étape d'HCK comprend une ou plusieurs zones d'HCK en lit fixes précédées d'au moins deux zones de garde d'HCK également en lit fixes, disposées en série pour être utilisées de façon cyclique. Le fonctionnement de ces zones de garde est identique au fonctionnement décrit dans le cas de l'HDM. Le système des réacteurs permutables en amont de la section d'HCK permet d'augmenter la durée de vie des catalyseurs d'HCK. Le catalyseur ainsi que les conditions opératoires des réacteurs permutables d'HCK sont généralement identiques aux réacteurs principaux d'HCK.

Selon encore une autre variante, un plateau filtrant peut être installé à l'entrée de la section d'HCK, soit à l'entrée des réacteurs principaux d'HCK, soit à l'entrée des réacteurs permutables d'HCK.

L'étape d'hydrocraquage peut avantageusement être mise en oeuvre à une température comprise entre 300 et 500°C, de préférence entre 350°C et 420°C et sous une pression absolue comprise entre 2 MPa et 35 MPa, de préférence entre 10 et 20 MPa. Le plus souvent la VVH se situe dans une gamme allant de $0,1\ h^{-1}$ à $5\ h^{-1}$, et de préférence de $0,1\ h^{-1}$ à $2\ h^{-1}$. La quantité d'hydrogène mélangée à la charge de l'HCK est habituellement de 100 à 5000 normaux mètres cube ($Nm^3$) par mètre cube ($m^3$) de charge liquide, le plus souvent de 200 à 2000 $Nm^3/m^3$ et de préférence de 300 à 1500 $Nm^3/m^3$. Habituellement, l'étape d'hydrocraquage est effectuée industriellement dans un ou plusieurs réacteurs à courant descendant de liquide.

Le taux de conversion dans l'étape d'HCK est généralement supérieur à 20%, de préférence supérieur à 30%, de manière plus préférée supérieur à 35 %. Il est généralement inférieur à 60%. Le taux de conversion est défini comme étant la fraction massique de composés organiques ayant un point d'ébullition supérieur à 343°C à l'entrée de la section réactionnelle moins la fraction massique de composés organiques ayant un point d'ébullition supérieur à 343°C à la sortie de la section réactionnelle, le tout divisé par la fraction massique de composés organiques ayant un point d'ébullition supérieur à 343°C à l'entrée de la section réactionnelle.

Pour activer les réactions d'HCK proprement dit, ledit catalyseur doit avantageusement être un catalyseur bifonctionnel, ayant une phase hydrogénante afin de pouvoir hydrogéner les aromatiques et réaliser l'équilibre entre les composés saturés et les oléfines correspondantes et une phase acide qui permet de promouvoir les réactions d'hydroisomérisation et d'hydrocraquage. La fonction acide est avantageusement apportée par des supports de grandes surfaces (généralement 100 à 800 $m^2.g^{-1}$) présentant une acidité superficielle, telles que les alumines halogénées (chlorées ou fluorées notamment), les combinaisons d'oxydes de bore et d'aluminium, les silice-alumines amorphes et les zéolithes. La fonction hydrogénante est avantageusement apportée soit par un ou plusieurs métaux du groupe VIII de la classification périodique des éléments, tels que fer, cobalt, nickel, ruthénium, rhodium, palladium, osmium, iridium et platine, soit par une association d'au moins un métal du groupe VIB de la classification périodique tels que molybdène et tungstène et au moins un métal non noble du groupe VIII (tels que nickel et cobalt). Le catalyseur d'hydrocraquage doit avantageusement également avoir une haute résistance aux impuretés et aux asphaltènes du fait de l'utilisation d'une charge lourde.

De préférence, les catalyseurs d'HCK utilisés comprennent au moins un métal choisi dans le groupe formé par les métaux des groupes VIII et VIB, pris seuls ou en mélange, et un support comprenant 10 à 90% poids d'une zéolithe contenant du fer et 90 à 10% poids d'oxydes inorganiques. Le métal du groupe VIB utilisé est de préférence choisi parmi le tungstène et le molybdène et le métal du groupe VIII est de préférence choisi parmi le nickel et le cobalt. Les catalyseurs d'HCK sont de préférence préparés selon la méthode de préparation décrite dans la demande de brevet japonaise n° 2289 419 (IKC) ou EP 0 384 186.

Des exemples de ce type de catalyseurs sont décrits dans les brevets JP 2966 985, JP 2908 959, JP 01 049399 et JP 61 028717, US 4 446 008, US 4 622,127, US 6 342 152, EP 0 537 500 et EP 0 622 118 .

Selon une autre variante préférée, le catalyseur utilisé est un catalyseur à base de nickel et tungstène sur un support silice-alumine.

Préalablement à l'injection de la charge, les catalyseurs utilisés dans le procédé selon la présente invention sont de préférence soumis à un traitement de sulfuration (in-situ ou ex-situ).

**L'étape de fractionnement (étape c)**

L'effluent au moins en partie hydrocraqué subit au moins une étape de fractionnement, éventuellement complétée par d'autres étapes de fractionnement supplémentaires, permettant de séparer au moins une fraction légère et une fraction lourde.

Cette séparation évite le surcraquage de la fraction légère dans l'étape HDS. Elle permet aussi de réduire l'investissement économique sur le réacteur d'HDS (moins de charge à traiter, moins de catalyseur ...) ou d'augmenter le temps de séjour dans le réacteur d'HDS et donc d'améliorer la désulfuration. La séparation permet notamment d'éliminer les gaz légers et permet ainsi de maximiser la pression partielle d'hydrogène nécessaire pour une HDS profonde par réinjection d'hydrogène par la suite.

L'étape de fractionnement c) comprend de préférence une séparation flash par un séparateur inter-étage. La séparation n'est pas faite selon un point de coupe précis, elle s'apparente plutôt à un flash. S'il fallait parler en termes de point de coupe, on pourrait dire qu'il se situe entre 200 et 450°C.

L'étape de fractionnement peut avantageusement être complétée par toute méthode connue de l'homme du métier telle que par exemple la combinaison d'un ou plusieurs séparateurs haute et/ou basse pression, et/ou d'étapes de distillation et/ou de strippage haute et/ou basse pression, et/ou d'étapes d'extraction liquide/liquide, et/ou des étapes de séparation solide/liquide et/ou d'étapes de centrifugations.

Selon une variante, au moins une partie et de préférence la totalité de la fraction lourde est ensuite envoyée dans l'étape d'hydrodésulfuration.

Selon une autre variante, l'étape de fractionnement comprend en plus une distillation atmosphérique de la fraction lourde permettant d'obtenir un distillat atmosphérique et un résidu atmosphérique.

Selon une autre variante, l'étape de fractionnement comprend en plus une distillation sous vide du résidu atmosphérique ou de la fraction lourde issue de la séparation flash permettant d'obtenir un distillat sous vide et un résidu sous vide.

Ainsi, la fraction lourde est fractionnée par distillation atmosphérique en au moins une fraction distillat atmosphérique contenant au moins une fraction légère d'hydrocarbures de type naphta, kérosène et/ou diesel et une fraction résidu atmosphérique. Au moins une partie de la fraction résidu atmosphérique peut également être fractionnée par distillation sous vide en une fraction distillat sous vide et une fraction résidu sous vide. Au moins une partie de la fraction résidu sous vide et/ou de la fraction résidu atmosphérique sont avantageusement envoyées dans l'étape d'hydrodésulfuration.

Les fractions issues de l'étape de fractionnement qui ne sont pas envoyées dans l'étape d'HDS (telles que la fraction légère issue de la séparation flash ou la fraction distillat atmosphérique ou encore la fraction distillat sous vide) peuvent subir des post-traitements ultérieurs.

**L'étape d'hydrodésulfuration (HDS) (étape d)**

Selon l'invention, au moins une partie et de préférence la totalité de la fraction lourde obtenue après l'étape de fractionnement est désulfurée dans une section d'HDS en lit fixe contenant au moins un catalyseur d'HDS. Cette fraction lourde soumise à l'étape d'HDS peut être soit au moins une partie de la fraction lourde obtenue par une séparation flash de l'effluent au moins en partie hydrocraqué, soit au moins une partie du résidu atmosphérique obtenu par distillation atmosphérique, soit au moins une partie du résidu sous vide obtenu par distillation sous vide, ou encore un mélange de ces fractions.

Selon une variante préféré, ladite fraction lourde est soumise à un traitement d'hydrodésulfuration dans une section d'hydrodésulfuration en lit fixe comprenant une ou plusieurs zones d'hydrodésulfuration en lits fixes précédées d'au moins deux zones de garde d'hydrodésulfuration également en lits fixes, disposées en série pour être utilisées de façon cyclique consistant en la répétition successive des étapes d") et d"') définies ci-après :

d') une étape, dans laquelle les zones de garde sont utilisées toutes ensembles pendant une durée au plus égale au temps de désactivation et/ou de colmatage de l'une d'entre elles,
d") une étape, durant laquelle la zone de garde désactivée et/ou colmatée est court-circuitée et le catalyseur qu'elle contient est régénéré et/ou remplacé par du catalyseur frais, et durant laquelle la ou les autres zone(s) de garde sont utilisée(s), et
d"') une étape, durant laquelle les zones de garde sont utilisées toutes ensembles, la zone de garde dont le catalyseur a été régénéré au cours de l'étape précédente étant reconnectée et ladite étape étant poursuivie pendant une durée au plus égale au temps de désactivation et/ou de colmatage de l'une des zones de garde.

Le fonctionnement de ces zones de garde est identique au fonctionnement décrit dans le cas de l'HDM. Le catalyseur ainsi que les conditions opératoires des réacteurs permutables d'HDS sont généralement identiques aux réacteurs principaux d'HDS.

Le système des réacteurs permutables en amont de la section HDS permet de protéger les catalyseurs d'HDS et de prolonger leur durée de vie. En effet, lors de l'hydrocraquage, et notamment lorsque la conversion est élevée, des sédiments (asphaltènes précipités) peuvent se formés dans la fraction lourde. Il est avantageux de les éliminer dans les réacteurs permutables d'HDS avant d'effectuer l'HDS dans les réacteurs principaux afin d'éviter tout colmatage des lits fixes de la section principale. Il est également avantageux de les éliminer pour atteindre la recommandation d'une teneur en sédiments après vieillissement inférieure ou égale à 0,1% pds pour les bases de fioul.

Selon encore une autre variante, un plateau filtrant peut être installé à l'entrée de la section d'HDS, soit à l'entrée des réacteurs principaux d'HDS, soit à l'entrée des réacteurs permutables d'HDS.

L'étape d'hydrodésulfuration peut avantageusement être mise en oeuvre à une température comprise entre 300 et 500°C, de préférence entre 350°C et 420°C et sous une pression absolue comprise entre 2 MPa et 35 MPa, de préférence entre 10 et 20 MPa. Le plus souvent la WH se situe dans une gamme allant de $0,1 \text{ h}^{-1}$ à $5 \text{ h}^{-1}$, et de préférence de $0,1 \text{ h}^{-1}$ à $2 \text{ h}^{-1}$. La quantité d'hydrogène mélangée à la charge de la section HDS est habituellement de 100 à 5000 normaux mètres cube ($Nm^3$) par mètre cube ($m^3$) de charge liquide, le plus souvent de 200 à 2000 $Nm^3/m^3$ et de préférence de 300 à 1500 $Nm^3/m^3$. Habituellement, l'étape d'hydrodésulfuration est effectuée industriellement dans un ou plusieurs réacteurs à courant descendant de liquide.

Afin de faciliter l'hydrodésulfuration, il faut travailler à forte pression partielle d'hydrogène ($ppH_2$) (c'est à dire à plus forte concentration d'hydrogène dans le gaz) ce qui possible via l'étape de fractionnement en amont qui élimine les composés légers et évite la dilution de l'$H_2$ dans l'étape d'HDS. L'hydrogène est ensuite réinjecté après le fractionnement avec la fraction lourde dans l'étape d'HDS. L'hydrogène peut être de l'hydrogène d'appoint et/ou de l'hydrogène recyclé du procédé ou d'un autre procédé. Si besoin, la section d'HDS peut être alimentée uniquement par de l'hydrogène d'appoint afin de favoriser l'HDS. La $ppH_2$ en entrée d'HDS est supérieure à 12 MPa, de préférence supérieure à 13 MPa.

Pour promouvoir l'HDS et la réduction du Carbone Conradson, le catalyseur idéal doit avoir un fort pouvoir hydrogénant de façon à réaliser un raffinage profond des produits : désulfuration, désazotation, et éventuellement poursuite de la démétallation et l'abaissement de la teneur en asphaltènes.

Le catalyseur d'HDS comprend avantageusement une matrice et au moins un élément hydro-déshydrogénant choisi dans le groupe formé par les éléments du groupe VIB et du groupe VIII de la classification périodique.

La matrice est avantageusement constituée par des composés, utilisés seuls ou en mélange, tels que l'alumine, l'alumine halogénée, la silice, la silice-alumine, les argiles (choisies par exemple parmi les argiles naturelles telles que le kaolin ou la bentonite), la magnésie, l'oxyde de titane, l'oxyde de bore, la zircone, les phosphates d'aluminium, les phosphates de titane, les phosphates de zirconium, le charbon, les aluminates. De préférence, la matrice contient de l'alumine, sous toutes ces formes connues de l'Homme du métier, et de manière encore plus préférée la matrice est l'alumine gamma.

L'élément hydro-déshydrogénant est avantageusement choisi dans le groupe formé par les éléments du groupe VIB et du groupe VIII non noble de la classification périodique. De préférence, l'élément hydro-déshydrogénant est choisi dans le groupe formé par le molybdène, le tungstène, le nickel et le cobalt. De manière plus préférée, l'élément hydro-déshydrogénant comprend au moins un élément du groupe VIB et au moins un élément du groupe VIII non noble. Cet élément hydro-déshydrogénant peut, par exemple, comprendre une combinaison d'au moins un élément du groupe VIII (Ni, Co) avec au moins un élément du groupe VIB (Mo, W). De préférence, le catalyseur d'hydrodésulfuration comprend, également avantageusement, au moins un élément dopant déposé sur ledit catalyseur et choisi dans le groupe formé par le phosphore, le bore et le silicium.

Le catalyseur d'HDS préféré comprend au moins un métal choisi dans le groupe formé par les métaux des groupes VIII et VIB, pris seuls ou en mélange, sur un oxyde réfractaire poreux comme support, ledit support étant généralement choisi dans le groupe formé par l'alumine, la silice, les silices-alumines, la magnésie, les argiles et les mélanges d'au moins deux de ces minéraux. Les catalyseurs d'HDS particulièrement préférés sont les catalyseurs CoMo, NiMo et/ou NiW sur alumine, également les catalyseurs CoMo, NiMo et/ou NiW sur alumine dopée avec au moins un élément compris dans le groupe des atomes formé par le phosphore, le bore et le silicium.

Des catalyseurs utilisables dans l'étape d'HDS sont par exemple indiqués dans les brevets EP113297, EP113284, US6589908, US4818743 ou US6332976. Préalablement à l'injection de la charge, les catalyseurs utilisés dans le procédé selon la présente invention sont de préférence soumis à un traitement de sulfuration tel que décrit ci-dessus.

## Séparation de l'effluent désulfurée (étape e)

Dans une forme courante de mise en oeuvre de l'invention l'effluent obtenu à l'étape d'HDS d) est au moins en partie, et souvent en totalité, envoyé dans une étape de séparation, dénommée étape e).

L'étape de séparation peut avantageusement être mise en oeuvre par toute méthode connue de l'homme du métier telle que par exemple la combinaison d'un ou plusieurs séparateurs haute et/ou basse pression, et/ou d'étapes de distillation et/ou de strippage haute et/ou basse pression, et/ou d'étapes d'extraction liquide/liquide, et/ou des étapes de séparation solide/liquide et/ou d'étapes de centrifugations.

De préférence, l'étape de séparation e) permet d'obtenir une phase gazeuse, au moins une fraction légère d'hydrocarbures de type naphta, kérosène et/ou diesel, une fraction distillat sous vide et une fraction résidu sous vide et/ou une fraction résidu atmosphérique.

De préférence, au moins une partie de l'effluent obtenue à l'étape d'hydrodésulfuration d) est envoyée dans une étape de séparation comprenant une distillation atmosphérique et une distillation sous vide, et dans lequel l'effluent de l'étape d'hydrodésulfuration est fractionné par distillation atmosphérique en une fraction gazeuse, au moins une fraction distillat atmosphérique contenant les bases carburants et une fraction résidu atmosphérique, au moins une partie du résidu atmosphérique est ensuite fractionnée par distillation sous vide en une fraction distillat sous vide et une fraction résidu sous vide.

La fraction résidu sous vide et/ou la fraction distillat sous vide et/ou la fraction résidu atmosphérique peuvent constituer en partie au moins les bases de fiouls ayant une teneur en soufre inférieure ou égale à 0.5 % pds. La fraction distillat sous vide peut constituer une base de fiouls ayant une teneur en soufre proche de 0.1 % pds.

La valorisation des différentes coupes de bases carburants (GPL, naphta, kérosène, et/ou diesel) obtenues n'est pas l'objet de la présente invention et ces méthodes sont bien connues de l'Homme du métier. Les produits obtenus peuvent être intégrés à des réservoirs carburants (aussi appelé "pools" carburants selon la terminologie anglo-saxonne) ou subir des étapes de raffinage supplémentaires. Le(s) fraction(s) naphta, kérosène, gazole et le gazole sous vide peuvent être soumises à un ou plusieurs traitements (hydrotraitement, hydrocraquage, alkylation, isomérisation, reformage catalytique, craquage catalytique ou thermique ou autres) pour les amener aux spécifications requises (teneur en soufre, point de fumée, octane, cétane, etc...) de façon séparée ou en mélange.

Les fractions gazeuses issues de l'étape de séparation e) subissent de préférence un traitement de purification pour récupérer l'hydrogène et le recycler vers les réacteurs d'hydrotraitement et/ou d'hydroconversion. Il en est de même pour la fraction légère provenant du séparateur inter-étage entre de l'étape d'HCK et d'HDS.

Une partie des fractions résidu sous vide et/ou résidu atmosphérique et/ou distillat sous vide obtenue dans l'étape e) peut également être recyclée dans l'étape d'hydrodémétallation a) et/ou dans l'étape d'hydrocraquage b). Ces recyclages permettent d'augmenter de façon significative le rendement en produit légers valorisables par exemple en carburants, et par leur effet diluant sur les asphaltènes, les métaux et l'azote, d'allonger la durée de vie des catalyseurs.

Une partie d'au moins une des fractions d'hydrocarbures de type naphta, kérosène et/ou diesel obtenue dans l'étape e) peut être recyclée dans l'étape d'hydrodémétallation a). Ces recyclages permettant de traiter des charges très visqueuses.

Afin de constituer un fioul répondant aux recommandations d'une teneur en sédiments après vieillissement inférieure ou égale à 0.1%, les bases de fiouls peuvent être soumises à une étape de séparation des sédiments et des fines de catalyseur, de préférence après l'étape de séparation e). D'une manière préférée, au moins une partie des fractions résidu sous vide et/ou distillat sous vide et/ou résidu atmosphérique issue de l'étape de séparation e) est soumise à une séparation des sédiments et des fines en utilisant au moins un filtre tel qu'un filtre rotatif ou un filtre à panier, ou un système de centrifugation tel qu'un hydrocyclone associé à des filtres, ou une décantation en ligne.

## Craquage catalytique (étape f)

Selon une variante, au moins une partie de la fraction distillat sous vide et/ou de la fraction résidu sous vide issue de l'étape e) est envoyée dans une section de craquage catalytique, dénommée étape f), dans laquelle elle est traitée dans des conditions permettant de produire une fraction gazeuse, une fraction essence, une fraction diesel et une fraction résiduelle.

Dans une forme de réalisation de l'invention, au moins une partie de la fraction résiduelle obtenue à l'étape f) de craquage catalytique, souvent appelé fraction slurry par l'Homme du métier, est recyclée à l'entrée de l'étape a). La fraction résiduelle peut aussi être au moins en partie voire en totalité envoyée dans la zone de stockage fuel lourd de la raffinerie.

Dans une forme particulière de réalisation de l'invention une partie de la fraction gazole (ou huile légère LCO) et/ou une partie de la fraction résiduelle (contenant l'huile lourde HCO) obtenue au cours de cette étape e) peut être utilisée pour constituer des bases fluxantes qui seront mélangées avec les bases de fiouls obtenues par le présent procédé.

L'étape f) de craquage catalytique est le plus souvent une étape de craquage catalytique en lit fluidisé par exemple selon le procédé mis au point par la demanderesse dénommé R2R. Cette étape peut être exécutée de manière classique connue des hommes du métier dans les conditions adéquates de craquage en vue de produire des produits hydrocarbonés de plus faible poids moléculaire. Des descriptions de fonctionnement et de catalyseurs utilisables dans le cadre du craquage en lit fluidisé dans cette étape e) sont décrits par exemple dans les documents de brevets US4695370, EP184517, US4959334, EP323297, US4965232, US5120691, US5344554, US5449496, EP485259, US5286690, US5324696, EP542604 et EP699224.

Le réacteur de craquage catalytique en lit fluidisé peut fonctionner à courant ascendant ou à courant descendant. Bien que cela ne soit pas une forme préférée de réalisation de la présente invention, il est également envisageable d'effectuer le craquage catalytique dans un réacteur à lit mobile. Les catalyseurs de craquage catalytique particulièrement préférés sont ceux qui contiennent au moins une zéolithe habituellement en mélange avec une matrice appropriée telle que par exemple l'alumine, la silice, la silice-alumine.

**Fluxage**

Afin de constituer un fioul répondant aux recommandations de la viscosité qui doit être inférieure ou égale à 380 cSt (50°C), les bases de fiouls obtenues par le présent procédé (donc le résidu atmosphérique et/ou le distillat sous vide et/ou le résidu sous vide) peuvent être mélangées, si nécessaire, avec des bases fluxantes de manière à atteindre la viscosité cible du grade de fioul désiré.

Les bases fluxantes peuvent être choisies parmi des huiles de coupe légère (LCO) d'un craquage catalytique, des huiles de coupe lourde (HCO) d'un craquage catalytique, le résidu d'un craquage catalytique, du kérosène, du gazole, du distillat sous vide et/ou une huile décantée.

De préférence, on utilisera du kérosène, du gazole et/ou du distillat sous vide obtenu(s) dans l'étape de séparation e) du procédé après l'hydrodésulfuration ou du gazole et/ou une partie de la fraction résiduelle (contenant notamment l'huile lourde HCO) obtenu(s) dans l'étape de craquage catalytique f).

**Description des figures**

Les figures suivantes présentent un mode de réalisation avantageux selon l'invention. On décrit essentiellement l'installation et le procédé selon l'invention. On ne reprendra pas les conditions opératoires décrites précédemment.

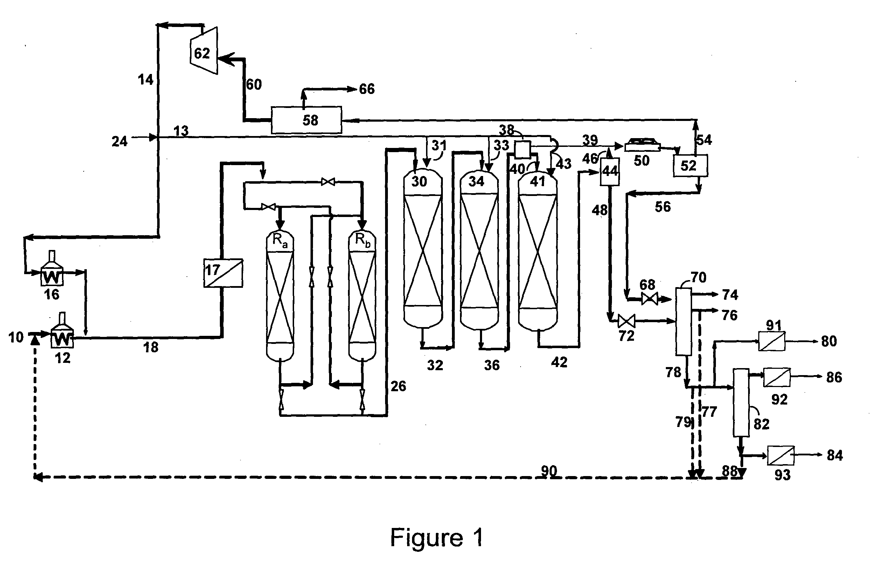

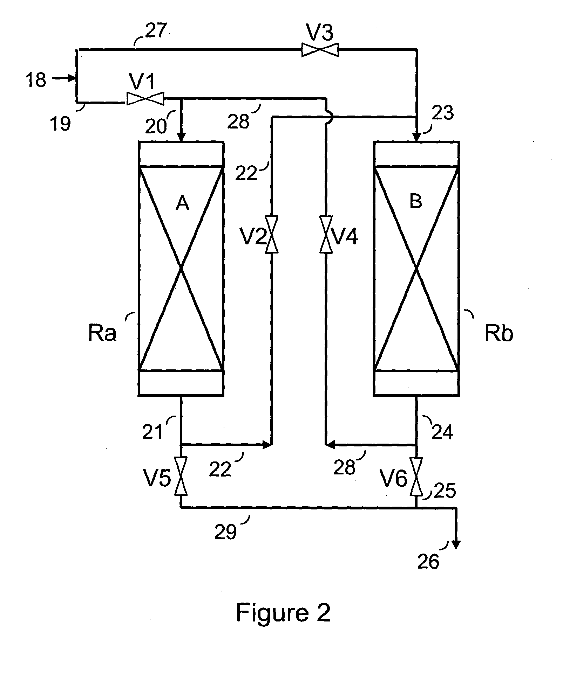

La figure 1 décrit le procède selon l'invention. Pour plus de lisibilité, le fonctionnement des zones de garde dans la section d'hydrodémétallation de la figure 1 est décrit dans la figure 2.

Dans la figure 1, la charge (10), préchauffée dans l'enceinte (12), mélangée avec de l'hydrogène recyclé (14) et de l'hydrogène d'appoint (24) préchauffés dans l'enceinte (16), est introduite par la conduite (18) dans le système de zones de garde. Elle traverse optionnellement un filtre (17).

En se référant à la figure 2, le fonctionnement des zones de garde dans la section d'hydrodémétallation comportant deux zones de garde (ou réacteurs permutables) Ra et Rb comprend une série de cycles comportant chacun quatre étapes successives :

- une première étape (étape a') au cours de laquelle la charge traverse successivement le réacteur Ra, puis le réacteur Rb,
- une deuxième étape (étape a") au cours de laquelle la charge traverse uniquement le réacteur Rb, le réacteur Ra étant court-circuité pour régénération et/ou remplacement du catalyseur,
- une troisième étape (étape a''') au cours de laquelle la charge traverse successivement le réacteur Rb, puis le réacteur Ra,
- une quatrième étape (étape a'''') au cours de laquelle la charge traverse uniquement le réacteur Ra, le réacteur Rb étant court-circuité pour régénération et/ou remplacement du catalyseur.

Au cours de l'étape a') la charge préchauffée est introduite par la ligne (18) et la ligne (19) comportant une vanne V1 ouverte vers la ligne (20) et le réacteur de garde Ra renfermant un lit fixe A de catalyseur. Durant cette période les vannes V3, V4 et V5 sont fermées. L'effluent du réacteur Ra est envoyé par la conduite (21), la conduite (22) comportant une vanne V2 ouverte et la conduite (23) dans le réacteur de garde Rb renfermant un lit fixe B de catalyseur. L'effluent du réacteur Rb est envoyé par les conduites (24) et (25) comportant une vanne V6 ouverte et la conduite (26) à la section d'HDM principale qui sera décrite pas la suite.

Au cours de l'étape a") les vannes V1, V2, V4 et V5 sont fermées et la charge est introduite par la ligne (18) et la ligne (27) comportant une vanne V3 ouverte vers la ligne (23) et le réacteur Rb. Durant cette période l'effluent du réacteur Rb est envoyé par les conduites (24) et (25) comportant une vanne V6 ouverte et la conduite (26) à la section d'HDM principale.

Au cours de l'étape a''') les vannes V1, V2 et V6 sont fermées et les vannes V3, V4 et V5 sont ouvertes. La charge est introduite par la ligne (18) et les lignes (27) et (23) vers le réacteur Rb. L'effluent du réacteur Rb est envoyé par la conduite (24), la conduite (28) comportant une vanne V4 ouverte et la conduite (20) dans le réacteur de garde Ra. L'effluent du réacteur Ra est envoyé par les conduites (21) et (29) comportant une vanne V5 ouverte et la conduite (26) à la section d'HDM principale. Au cours d'étape a'''') les vannes V2, V3, V4 et V6 sont fermées et les vannes V1 et V5 sont ouvertes. La charge est introduite par la ligne (18) et les lignes (19) et (20) vers le réacteur Ra. Durant cette période l'effluent du réacteur Ra est envoyé par les conduites (21) et (29) comportant une vanne V5 ouverte et la conduite (26) à la section d'HDM principale. Le cycle recommence ensuite de nouveau.

L'effluent sortant du ou des réacteurs de garde via la ligne (26) est optionnellement remélangé avec de l'hydrogène (d'appoint et/ou recyclé) arrivant par la conduite (13) puis la conduite (31) dans un réacteur principal d'HDM (30) qui renferme un lit fixe de catalyseur. Pour des raisons de lisibilité, un seul réacteur d'HDM, d'HCK et d'HDS est représenté sur la figure, mais la zone d'HDM, d'HCK et d'HDS comporte classiquement plusieurs réacteurs en série par section. Si besoin, l'hydrogène recyclé et/ou d'appoint peut également être introduit dans les réacteurs entre les différents lits catalytiques (quench) (non représentée).

L'effluent du réacteur d'HDM est soutiré par la conduite (32), puis envoyé dans le premier réacteur d'HCK (34) où il traverse un lit fixe de catalyseur. L'hydrogène est optionnellement injecté par la conduite (33).

L'effluent traité dans l'étape d'HCK est envoyé par la ligne (36) dans un séparateur inter-étage (38) à partir duquel on récupère une fraction légère (39) et une fraction lourde (40).

La fraction lourde (40) est envoyée dans le premier réacteur d'HDS (41) où il traverse un lit fixe de catalyseur. L'hydrogène est réinjecté via la conduite (43).

L'effluent traité dans l'étape d'hydrodésulfuration est envoyé par la ligne (42) dans un séparateur (haute pression haute température (HPHT) (44) à partir duquel on récupère une fraction gazeuse (46) et une fraction liquide (48). La fraction gazeuse (46) est envoyée, de préférence en mélange avec la fraction légère (39) issu du séparateur inter-étape (38), généralement via un échangeur (non représenté) ou un aéroréfrigérant (50) pour refroidissement à un séparateur haute pression basse température (HPBT) (52) à partir duquel on récupère une fraction gazeuse (54) contenant les gaz ($H_2$, $H_2S$, $NH_3$, hydrocarbures C1-C4, ...) et une fraction liquide (56).

La fraction gazeuse (54) du séparateur haute pression basse température (HPBT) (52) est traitée dans l'unité de purification d'hydrogène (58) à partir de laquelle on récupère l'hydrogène (60) pour le recycler via le compresseur (62) et la ligne (14) aux réacteurs permutables ou via la ligne (13) aux réacteurs principaux d'HDM, d'HCK et/ou d'HDS. Les gaz contenant des composés azotés et soufrés indésirables sont évacués de l'installation (flux (66)).

La fraction liquide (56) du séparateur haute pression basse température (HPBT) (52) est détendue dans le dispositif (68) puis envoyée vers le système de fractionnement (70).

La fraction liquide (48) issue de la séparation haute pression haute température (HPHT) (44) est détendue dans le dispositif (72) puis envoyée vers le système de fractionnement (70). Bien évidemment, les fractions (56) et (48) peuvent être envoyées ensemble, après détente, au système (70). Le système de fractionnement (70) comprend un système de distillation atmosphérique pour produire un effluent gazeux (74), au moins une fraction dite légère (76) et contenant notamment du naphta, du kérosène et du diesel et une fraction résidu atmosphérique (78). Tout ou partie de la fraction résidu atmosphérique (78) est envoyée à une colonne de distillation sous vide (82) pour récupérer une fraction (84) contenant le résidu sous vide et une fraction distillat sous vide (86) contenant du gazole sous vide. Optionnellement, la fraction résidu atmosphérique (80), la fraction distillat sous vide (86) et/ou la fraction résidu sous vide (84) qui constituent les bases de fiouls recherchées peuvent être soumises à une étape de séparation des fines et sédiments par des filtres (91), (92) et (93) respectivement par exemple.

Une partie de la fraction résidu sous vide (88), éventuellement mélangée avec une partie de la fraction résidu atmosphérique (79) et/ou avec une partie d'au moins une fraction dite légère (77) contenant notamment du naphta, du kérosène et du diesel, peut être recyclée par la ligne (90) dans le réacteur d'HDM (et/ou dans le réacteur d'HCK, non représentée).

Une partie de la fraction résidu atmosphérique peut également être envoyée vers un autre procédé (hydrocraquage ou craquage catalytique ou hydrotraitement).

## Exemples

Les exemples suivant illustrent l'invention sans toutefois en limiter la portée.

## Exemple 1 : Hydroconversion par HDM, HCK, séparation, puis HDS (conforme à l'invention)

On traite un résidu atmosphérique venant du Moyen-Orient contenant 10 % pds d'asphaltènes, 170 ppm poids de métaux et 4.6 % pds de soufre dans une section d'hydroconversion comportant une section d'HDM, une section d'HCK, un séparateur inter-étage et une section d'HDS. Les conditions opératoires dans les trois sections HDM, HCK et HDS sont identiques et figurent dans le tableau 1. L'HDM est effectué avec un catalyseur CoMoNiP; l'HCK est effectué avec un catalyseur NiW sur un support silice alumine amorphe, l'HDS est effectué avec un catalyseur CoMoNiP.

Étant donné qu'on enlève la fraction légère avec l'$H_2$ par la séparation, l'hydrogène est réinjecté en entrée HDS. Grâce à l'étape de séparation, la fraction lourde entrant dans la section HDS est réduite. Le temps séjour est donc plus important et favorise également une HDS plus poussée.

Tableau 1 : Conditions opératoires avec séparateur

| Catalyseurs | HDM + HCK + SEP + HDS |
|---|---|
| Température moyenne (°C) | 390 |
| Pression totale (MPa) | 15 |
| WH globale (Sm$^3$/h charge*/m$^3$ de catalyseur) | 0.15 |
| H$_2$ entrée unité (Nm$^3$ / m$^3$ charge) | 1000 |
| H$_2$ entrée HDS (Nm$^3$ / m$^3$ charge) | 820 |
| PP**H$_2$ entrée HDS (MPa) | 13.4 |
| PP**H$_2$S entrée HDS (MPa) | 0.08 |
| C5$^+$ entrée HDS / C5$^+$ effluent HCK (% pds) | 68 |
| * charge = charge entrée unité; ** PP = pression partielle | |

**Exemple 2 : Hydroconversion par HDM, puis HCK, puis HDS (sans séparation) (non conforme à l'invention)**

On traite la même charge que dans l'exemple 1 dans une section comportant une section d'HDM, une section HCK et une section d'HDS. Dans cet exemple on n'effectue pas de séparation entre la section HCK et la section HDS. Les conditions opératoires dans les trois sections HDM, HCK et HDS figurent dans le tableau 2. Les catalyseurs ainsi que leurs quantités utilisées sont identiques à ceux de l'exemple 1.

Tableau 2 : Conditions opératoires sans séparateur

| Catalyseurs | HDM + HCK + HDS |
|---|---|
| Température moyenne (°C) | 390 |
| Pression totale (MPa) | 15 |
| VVH globale (Sm$^3$/h charge/m$^3$ de catalyseur) | 0.15 |
| H$_2$ entrée unité (Nm$^3$ / m$^3$ charge) | 1000 |
| H$_2$ entrée HDS (Nm$^3$ / m$^3$ charge) | 820 |
| PPH$_2$ entrée HDS (MPa) | 12.4 |
| PPH$_2$S entrée HDS (MPa) | 0.25 |
| C5$^+$ entrée HDS / C5$^+$ effluent HCK (% pds) | 100 |

Le rendement et la teneur en soufre de chaque fraction obtenue de l'effluent sortant de la section d'HDS sont donnés dans le tableau 3.

Tableau 3 : Rendements et teneur en soufre de l'effluent de la section HDS (% pds / charge)

| | Exemple 1 (avec séparateur) | | Exemple 2 (sans séparateur) | |
|---|---|---|---|---|
| Produits | Rdt (%pds/charge) | S (%pds) | Rdt (%pds/charge) | S (%pds) |
| NH$_3$ | 0.2 | - | 0.2 | - |
| H$_2$S | 4.6 | 94.12 | 4.0 | 94.12 |
| C1-C4 (gaz) | 2.9 | - | 4.9 | - |
| Naphta (PI-157°C) | 10.8 | 0.01 | 9.3 | 0.01 |
| Diesel + kérosène (157-343°C) | 20.9 | 0.05 | 20.5 | 0.02 |
| Distillat sous vide (343-525°C) | 26.3 | 0.13 | 26.5 | 0.14 |

(suite)

| Produits | Exemple 1 (avec séparateur) | | Exemple 2 (sans séparateur) | |
|---|---|---|---|---|
| | Rdt (%pds/charge) | S (%pds) | Rdt (%pds/charge) | S (%pds) |
| Résidu sous vide (525°C+) | 36.2 | 0.48 | 36.5 | 0.73 |
| Rendements et % pds après remélange dans le cas avec séparateur | | | | |

La conversion est donnée dans le tableau 4. Elle est calculée de la façon suivante :

$$\text{Conversion } 343^+ = (343^+ \text{ charge} - 343^+ \text{ effluent})/(343^+ \text{ charge})$$

Tableau 4 : Conversion

| | Exemple 1 (avec séparateur) | Exemple 2 (sans séparateur) |
|---|---|---|
| 343°C+ charge (% pds / charge) | 97.2 | 97.2 |
| 343°C+ effluent (% pds / charge) | 62.5 | 62.9 |
| Conversion 343°C+ | 35.7 | 35.2 |

On observe que le procédé selon l'invention permet d'obtenir des bases carburants recherchées (naphta + kérosène + diesel) avec un rendement d'environ 32 %.

Le résidu sous vide et le distillat sous vide obtenus ont une teneur en soufre inférieure à 0.5 % poids et constituent des bases de choix pour les pools fiouls de soute à faible teneurs en soufre (<0.5% pds). En mélangeant ces fractions, on obtient un combustible marin ayant une teneur en soufre de 0,33 % pds et une viscosité de 380 cSt à 50°C.

Le distillat sous vide peut également constituer une base de choix pour combustible marin à très faible teneur en soufre (0,13 % pds).

**Revendications**

1. Procédé de conversion d'une charge hydrocarbonée ayant une teneur en soufre d'au moins 0,1 % poids, une température initiale d'ébullition d'au moins 300°C et une température finale d'ébullition d'au moins 440°C dans lequel :

   a) ladite charge est soumise à un traitement d'hydrodémétallation dans une section d'hydrodémétallation en lit fixe comprenant une ou plusieurs zones d'hydrodémétallation en lits fixes précédées d'au moins deux zones de garde d'hydrodémétallation également en lits fixes, disposées en série pour être utilisées de façon cyclique consistant en la répétition successive des étapes a") et a"') définies ci-après :

   a') une étape, dans laquelle les zones de garde sont utilisées toutes ensembles pendant une durée au plus égale au temps de désactivation et/ou de colmatage de l'une d'entre elles,

   a") une étape, durant laquelle la zone de garde désactivée et/ou colmatée est court-circuitée et le catalyseur qu'elle contient est régénéré et/ou remplacé par du catalyseur frais, et durant laquelle la ou les autres zone(s) de garde sont utilisée(s), et

   a"') une étape, durant laquelle les zones de garde sont utilisées toutes ensembles, la zone de garde dont le catalyseur a été régénéré au cours de l'étape précédente étant reconnectée et ladite étape étant poursuivie pendant une durée au plus égale au temps de désactivation et/ou de colmatage de l'une des zones de garde,

   b) au moins une partie de l'effluent au moins en partie démétallisé est hydrocraquée dans une section d'hydrocraquage contenant au moins un catalyseur d'hydrocraquage en lit fixe,

   c) au moins une partie de l'effluent au moins en partie hydrocraqué est soumise à un fractionnement permettant d'obtenir une fraction légère et une fraction lourde,

   d) au moins une partie de ladite fraction lourde est hydrodésulfurée dans une section d'hydrodésulfuration contenant au moins un catalyseur d'hydrodésulfuration en lit fixe, et dans laquelle on réinjecte de l'hydrogène.

**2.** Procédé selon la revendication 1 dans lequel l'hydrodémétallation, l'hydrocraquage ou l'hydrodésulfuration sont effectuées à une température de 300 à 500°C, sous une pression absolue de 2 à 35 MPa, avec une vitesse spatiale horaire de 0,1 à 5 h$^{-1}$ et la quantité d'hydrogène mélangée à la charge de chaque section est de 100 à 5000 Nm$^3$/m$^3$.

**3.** Procédé selon l'une des revendications précédentes dans lequel la charge hydrocarbonée est choisie parmi les résidus atmosphériques, les résidus sous vide issus de distillation directe, des pétroles bruts, des pétroles bruts étêtés, les huiles désasphaltées, les résidus issus des procédés de conversion, les huiles lourdes de toute origine, des sables bitumineux ou leurs dérivés, des schistes bitumineux ou leurs dérivés, seule ou en mélange.

**4.** Procédé selon l'une des revendications précédentes dans lequel une co-charge est introduite avec la charge, la co-charge est choisie parmi des fractions gazole ou distillat sous vide issues de distillation ou de procédé de conversion, une huile de coupe légère, une huile de coupe lourde, une huile décantée, un résidu de craquage catalytique en lit fluidisé, des coupes issues du procédé de liquéfaction du charbon ou de la biomasse, des extraits aromatiques, de l'huile de pyrolyse, des huiles végétales, d'algues ou animales, seule ou en mélange.

**5.** Procédé selon l'une des revendications précédentes dans lequel l'étape de fractionnement c) comprend une séparation flash par un séparateur inter-étage.

**6.** Procédé selon la revendication précédente dans lequel l'étape de fractionnement comprend en plus une distillation atmosphérique de la fraction lourde permettant d'obtenir un distillat atmosphérique et un résidu atmosphérique.

**7.** Procédé selon les revendications 5 et 6 dans lequel l'étape de fractionnement comprend en plus une distillation sous vide du résidu atmosphérique ou de la fraction lourde issue de la séparation flash permettant d'obtenir un distillat sous vide et un résidu sous vide.

**8.** Procédé selon l'une des revendications précédentes dans lequel pour l'étape d'hydrodésulfuration d) ladite fraction lourde est soumise à un traitement d'hydrodésulfuration dans une section d'hydrodésulfuration en lit fixe comprenant une ou plusieurs zones d'hydrodésulfuration en lits fixes précédées d'au moins deux zones de garde d'hydrodésulfuration également en lits fixes, disposées en série pour être utilisées de façon cyclique consistant en la répétition successive des étapes d") et d''') définies ci-après :

d') une étape, dans laquelle les zones de garde sont utilisées toutes ensembles pendant une durée au plus égale au temps de désactivation et/ou de colmatage de l'une d'entre elles,
d") une étape, durant laquelle la zone de garde désactivée et/ou colmatée est court-circuitée et le catalyseur qu'elle contient est régénéré et/ou remplacé par du catalyseur frais, et durant laquelle la ou les autres zone(s) de garde sont utilisée(s), et
d''') une étape, durant laquelle les zones de garde sont utilisées toutes ensembles, la zone de garde dont le catalyseur a été régénéré au cours de l'étape précédente étant reconnectée et ladite étape étant poursuivie pendant une durée au plus égale au temps de désactivation et/ou de colmatage de l'une des zones de garde.

**9.** Procédé selon l'une des revendications précédentes dans lequel au moins une partie de l'effluent obtenue à l'étape d'hydrodésulfuration d) est envoyée dans une étape de séparation, dénommée étape e), comprenant une distillation atmosphérique et une distillation sous vide, et dans lequel l'effluent de l'étape d'hydrodésulfuration est fractionné par distillation atmosphérique en une fraction gazeuse, au moins une fraction distillat atmosphérique contenant les bases carburants et une fraction résidu atmosphérique, au moins une partie du résidu atmosphérique est ensuite fractionnée par distillation sous vide en une fraction distillat sous vide et une fraction résidu sous vide.

**10.** Procédé selon la revendication 9 dans lequel une partie des fractions résidu sous vide et/ou résidu atmosphérique et/ou distillat sous vide est recyclée dans l'étape d'hydrodémétallation a) et/ou dans l'étape d'hydrocraquage b).

**11.** Procédé selon les revendications 9 et 10 dans lequel une partie d'au moins une des fractions d'hydrocarbures de type naphta, kérosène et/ou diesel est recyclée dans l'étape d'hydrodémétallation a).

**12.** Procédé selon les revendications 9 à 11 dans lequel au moins une partie des fractions résidu atmosphérique et/ou distillat sous vide et/ou résidu sous vide est soumise à une séparation des sédiments et des fines de catalyseur, en utilisant au moins un filtre, un système de centrifugation ou une décantation en ligne.

**13.** Procédé selon les revendications 9 à 12 dans lequel le résidu atmosphérique et/ou le distillat sous vide et/ou le résidu sous vide sont mélangés avec des bases fluxantes choisies parmi des huiles de coupe légère d'un craquage catalytique, des huiles de coupe lourde d'un craquage catalytique, le résidu d'un craquage catalytique, du kérosène, du gazole, du distillat sous vide et/ou une huile décantée.

14. Procédé selon les revendications 9 à 13 dans lequel au moins une partie de la fraction distillat sous vide et/ou de la fraction résidu sous vide est envoyée dans une section de craquage catalytique, dénommée étape f), dans laquelle elle est traitée dans des conditions permettant de produire une fraction gazole (ou huile légère LCO) et/ou une fraction résiduelle (contenant l'huile lourde HCO).

15. Procédé selon la revendication 13 dans lequel les bases fluxantes sont choisies parmi du kérosène, du gazole et/ou du distillat sous vide obtenu(s) dans l'étape de séparation e) du procédé après l'hydrodésulfuration.

16. Procédé selon la revendication 14 dans lequel le résidu atmosphérique et/ou le distillat sous vide et/ou le résidu sous vide sont mélangés avec des bases fluxantes choisies parmi une fraction gazole (ou huile légère LCO) et/ou une fraction résiduelle (contenant l'huile lourde HCO) obtenue(s) dans l'étape de craquage catalytique f).

**Patentansprüche**

1. Verfahren zur Umwandlung einer Kohlenwasserstoffcharge mit einem Schwefelgehalt von mindestens 0,1 Gew.-%, einer Anfangssiedetemperatur von mindestens 300 °C und einer Endsiedetemperatur von mindestens 440 °C, wobei:

   a) der Einsatz einer Hydrodemetallierungsbehandlung in einem Hydrodemetallierungsabschnitt im festen Bett unterzogen wird, umfassend eine oder mehrere Hydrodemetallierungszonen in festen Betten, denen mindestens zwei Hydrodemetallierungsschutzzonen ebenfalls in festen Betten vorausgehen, die zur zyklischen Verwendung in Reihe angeordnet sind, die darin besteht, dass die nachfolgend definierten Schritte a") und a"') nacheinander wiederholt werden:

   a') ein Schritt, in dem die Schutzzonen alle zusammen während einer Dauer von höchstens der Deaktivierungs- und/oder Zusatzzeit von einer von ihnen verwendet werden,
   a") ein Schritt, in dessen Verlauf die deaktivierte und/oder zugesetzte Schutzzone ausgeschaltet wird und der Katalysator, den sie enthält, regeneriert und/oder durch frischen Katalysator ersetzt wird, und in dessen Verlauf die andere(n) Schutzzone(n) verwendet wird (werden), und
   a"') ein Schritt, in dessen Verlauf die Schutzzonen alle zusammen verwendet werden, wobei die Schutzzone, deren Katalysator während des vorhergehenden Schritts regeneriert wurde, wieder angeschlossen wird und der Schritt während einer Dauer von höchstens gleich der Deaktivierungs- und/oder zugesetzte Zeit der einen der Schutzzonen fortgesetzt wird,

   b) mindestens ein Teil des mindestens teilweise demetallierten Abflusses in einem Abschnitt zum Hydrocracken, der mindestens einen Hydrocracking-Katalysator im festen Bett enthält, hydrogecrackt wird,
   c) mindestens ein Teil des mindestens teilweise hydrogecrackten Abflusses einer Fraktionierung unterzogen wird, die es ermöglicht, eine leichte Fraktion und eine schwere Fraktion zu erhalten,
   d) mindestens ein Teil der schweren Fraktion in einem Abschnitt zur Hydrodesulfurierung hydrodesulfuriert wird, der mindestens einen Katalysator zur Hydrodesulfurierung im festen Bett enthält, und wobei Wasserstoff wiedereingespritzt wird.

2. Verfahren nach Anspruch 1, wobei die Hydrodemetallierung, das Hydrocracken oder die Hydrodesulfurierung bei einer Temperatur von 300 bis 500 °C, unter einem absoluten Druck von 2 bis 35 MPa, mit einer Raumgeschwindigkeit pro Stunde von 0,1 bis 5 h$^{-1}$ durchgeführt werden und die Menge an Wasserstoff, die dem Einsatz jedes Abschnitts zugemischt wird, 100 bis 5.000 Nm$^3$/m$^3$ beträgt.

3. Verfahren nach einem der vorhergehenden Ansprüche, wobei die Kohlenwasserstoffcharge ausgewählt ist aus atmosphärischen Rückständen, aus der direkten Destillation stammenden Vakuumrückständen, Rohölen, leicht destillierten Rohölen, deasphaltierten Ölen, Rückständen aus Konversionsverfahren, Schwerölen jeden Ursprungs, Ölsanden oder deren Derivaten, Ölschiefern oder deren Derivaten, allein oder als Gemisch.

4. Verfahren nach einem der vorhergehenden Ansprüche, wobei mit der Charge eine Co-Charge eingeführt wird, wobei die Co-Charge ausgewählt ist aus Diesel- oder Vakuumdestillatfraktionen, die aus der Destillation oder aus Konversionsverfahren stammen, einem Öl aus einem leichten Schnitt, einem Öl aus einem schweren Schnitt, einem geklärten Öl, einem Rückstand aus dem katalytischen Cracken im Wirbelbett, Schnitten, die aus dem Verfahren zur Kohleverflüssigung oder aus Biomasse stammen, Aromatenextrakten, Pyrolyseöl, Pflanzen-, Algen- oder Tierölen, allein oder als Gemisch.

**5.** Verfahren nach einem der vorhergehenden Ansprüche, wobei der Schritt zur Fraktionierung c) eine Flash-Separation durch einen in einer Zwischenphase arbeitenden Separator umfasst.

**6.** Verfahren nach einem der vorhergehenden Ansprüche, wobei der Schritt zur Fraktionierung ferner eine atmosphärische Destillation der schweren Fraktion umfasst, die es ermöglicht, ein atmosphärisches Destillat und einen atmosphärischen Rückstand zu erhalten.

**7.** Verfahren nach den Ansprüchen 5 und 6, wobei der Schritt zur Fraktionierung ferner ein Vakuumdestillat des atmosphärischen Rückstands oder der schweren Fraktion umfasst, die aus der Flash-Separation stammt, die es ermöglicht, ein Vakuumdestillat und einen Vakuumrückstand zu erhalten.

**8.** Verfahren nach einem der vorhergehenden Ansprüche, wobei für den Schritt zur Hydrodesulfurierung d) die schwere Fraktion einer Hydrodesulfurierungsbehandlung in einem Hydrodesulfurierungsabschnitt im festen Bett unterzogen wird, umfassend eine oder mehrere Hydrodesulfurierungszonen in festen Betten, denen mindestens zwei Hydrodesulfurierungsschutzzonen ebenfalls in festen Betten vorausgehen, die zur zyklischen Verwendung in Reihe angeordnet sind, die darin besteht, dass die nachfolgend definierten Schritte d") und d"') nacheinander wiederholt werden:

d') ein Schritt, in dem die Schutzzonen alle zusammen während einer Dauer von höchstens der Deaktivierungs- und/oder Zusatzeit von einer von ihnen verwendet werden,
d") ein Schritt, in dessen Verlauf die deaktivierte und/oder zugesetzte Schutzzone ausgeschaltet wird und der Katalysator, den sie enthält, regeneriert und/oder durch frischen Katalysator ersetzt wird, und in dessen Verlauf die andere(n) Schutzzone(n) verwendet wird (werden), und
d"') ein Schritt, in dessen Verlauf die Schutzzonen alle zusammen verwendet werden, wobei die Schutzzone, deren Katalysator während des vorhergehenden Schritts regeneriert wurde, wieder angeschlossen wird und der Schritt während einer Dauer von höchstens gleich der Deaktivierungs- und/oder Zusatzeit der einen der Schutzzonen fortgesetzt wird.

**9.** Verfahren nach einem der vorhergehenden Ansprüche, wobei mindestens ein Teil des im Schritt zur Hydrodesulfurierung d) erhaltenen Abflusses in einen Schritt zur Separation, genannt Schritt e), geschickt wird, der eine atmosphärische Destillation und eine Vakuumdestillation umfasst und wobei der Abfluss aus dem Schritt zur Hydrodesulfurierung durch atmosphärische Destillation in eine gasförmige Fraktion, mindestens eine atmosphärische Destillatfraktion, die Treibstoffgrundstoffe enthält, und eine atmosphärische-Rückstand-Fraktion fraktioniert wird, wobei mindestens ein Teil des atmosphärischen Rückstands anschließend durch Vakuumdestillation in eine Vakuumdestillatfraktion und eine Vakuumrückstandfraktion fraktioniert wird.

**10.** Verfahren nach Anspruch 9, wobei ein Teil der Vakuumrückstand- und/oder atmosphärische-Rückstand- und/oder Vakuumdestillatfraktionen in den Schritt zur Hydrodemetallierung a) und/oder in den Schritt zum Hydrocraquen b) zurückgeführt wird.

**11.** Verfahren nach den Ansprüchen 9 und 10, wobei mindestens ein Teil einer der Kohlenwasserstofffraktionen vom Typ Naphta, Kerosin und/oder Diesel in den Schritt zur Hydrodemetallierung a) zurückgeführt wird.

**12.** Verfahren nach den Ansprüchen 9 bis 11, wobei mindestens ein Teil der atmosphärische-Rückstand- und/oder Vakuumdestillat- und/oder Vakuumrückstandfraktionen einer Separation der Sedimente und der Katalysatorteilchen unter Verwendung mindestens eines Filters, eines Zentrifugensystems oder einer Online-Dekantierung unterzogen wird.

**13.** Verfahren nach den Ansprüchen 9 bis 12, wobei der atmosphärische Rückstand und/oder das Vakuumdestillat und/oder der Vakuumrückstand mit Fluxmittelgrundstoffen gemischt werden, ausgewählt aus Ölen aus einem leichten Schnitt aus einem katalytischen Cracken, Ölen aus einem schweren Schnitt aus einem katalytischen Cracken, dem Rückstand aus einem katalytischen Cracken, Kerosin, Diesel, Vakuumdestillat und/oder einem geklärten Öl.

**14.** Verfahren nach den Ansprüchen 9 bis 13, wobei mindestens ein Teil der Vakuumdestillatfraktion und/oder der Vakuumrückstandfraktion in einen Abschnitt zum katalytischen Cracken, genannt Schritt f), geschickt wird, in dem sie unter Bedingungen behandelt wird, die es ermöglichen, eine Dieselfraktion (oder Leichtöl LCO) und/oder eine Restfraktion (die das Schweröl HCO enthält) zu produzieren.

**15.** Verfahren nach Anspruch 13, wobei die Fluxmittelgrundstoffe ausgewählt sind aus Kerosin, Diesel und/oder Vakuumdestillat, das (die) in dem Schritt zur Separation e) des Verfahrens nach der Hydrodesulfurierung erhalten wurden.

**16.** Verfahren nach Anspruch 14, wobei der atmosphärische Rückstand und/oder das Vakuumdestillat und/oder der Vakuumrückstand mit Fluxmittelgrundstoffen gemischt werden, ausgewählt aus einer Dieselfraktion (oder Leichtöl LCO) und/oder einer Restfraktion (die Schweröl HCO enthält), die in dem Schritt zum katalytischen Cracken f) erhalten wurde(n).

**Claims**

**1.** A process for the conversion of a hydrocarbon feed with a sulphur content of at least 0.1% by weight, an initial boiling point of at least 300°C and an end point of at least 440°C, in which:

a) said feed undergoes a hydrodemetallization treatment in a fixed bed hydrodemetallization section comprising one or more fixed bed hydrodemetallization zones preceded by at least two hydrodemetallization guard zones, also fixed bed, disposed in series for use in a cyclic manner consisting of the successive repetition of steps a") and a''') defined below:

a') a step in which the guard zones are used together for a period at most equal to the deactivation and/or plugging time of one of them;
a") a step during which the deactivated and/or plugged guard zone is shortcircuited and the catalyst it contains is regenerated and/or replaced by fresh catalyst, and during which the other guard zone(s) is/are in use; and
a''') a step during which the guard zones are used together, the guard zone for which the catalyst has been regenerated during the preceding step being reconnected and said step being continued for a period at most equal to the deactivation and/or plugging time of one of the guard zones;

b) at least a portion of the at least partially demetallized effluent is hydrocracked in a hydrocracking section containing at least one fixed bed hydrocracking catalyst;
c) at least a portion of the at least partially hydrocracked effluent undergoes fractionation in order to obtain a light fraction and a heavy fraction;
d) at least a portion of said heavy fraction is hydrodesulphurized in a hydrodesulphurization section containing at least one fixed bed hydrodesulphurization catalyst, and into which hydrogen is reinjected.

**2.** A process according to claim 1, in which hydrodemetallization, hydrocracking or hydrodesulphurization are carried out at a temperature of 300°C to 500°C, at an absolute pressure of 2 to 35 MPa, with an hourly space velocity of 0.1 to 5 $h^{-1}$ and the quantity of hydrogen mixed with the feed of each section is in the range 100 to 5000 $Nm^3/m^3$.

**3.** A process according to one of the preceding claims, in which the hydrocarbon feed is selected from atmospheric residues, vacuum residues from straight run distillation, crude oils, topped crude oils, deasphalted oils, residues obtained from conversion processes, heavy oils of any origin, bituminous sands or their derivatives, and oil shales or their derivatives, used alone or as a mixture.

**4.** A process according to one of the preceding claims, in which a co-feed is introduced with the feed, the co-feed being selected from gas oil or vacuum distillate fractions obtained from distillation or from a conversion process, a light cycle oil, a heavy cycle oil, a decanted oil, a fluidized bed catalytic cracking residue, cuts from a coal or biomass liquefaction process, aromatic extracts, pyrolysis oil, vegetable, algae or animal oils, used alone or as a mixture.

**5.** A process according to one of the preceding claims, in which the fractionation step c) comprises a flash separation via an inter-step separator.

**6.** A process according to the preceding claim, in which the fractionation step additionally comprises an atmospheric distillation of the heavy fraction which can be used in order to obtain an atmospheric distillate and an atmospheric residue.

7. A process according to claims 5 and 6, in which the fractionation step additionally comprises a vacuum distillation of the atmospheric residue or of the heavy fraction obtained from flash separation in order to obtain a vacuum distillate and a vacuum residue.

8. A process according to one of the preceding claims, in which in the hydrodesulphurization step d), said heavy fraction undergoes a hydrodesulphurization treatment in a fixed bed hydrodesulphurization section comprising one or more fixed bed hydrodesulphurization zones preceded by at least two hydrodesulphurization guard zones, also fixed bed, disposed in series for use in a cyclic manner consisting of the successive repetition of steps d") and d"') defined below:

   d') a step in which the guard zones are used together for a period at most equal to the deactivation and/or plugging time of one of them;
   d") a step during which the deactivated and/or plugged guard zone is shortcircuited and the catalyst it contains is regenerated and/or replaced by fresh catalyst, and during which the other guard zone(s) is/are in use; and
   d"') a step during which the guard zones are used together, the guard zone for which the catalyst has been regenerated during the preceding step being reconnected and said step being continued for a period at most equal to the deactivation and/or plugging time of one of the guard zones.

9. A process according to one of the preceding claims, in which at least a portion of the effluent obtained from the hydrodesulphurization step d) is sent to a separation step termed step e) comprising atmospheric distillation and vacuum distillation, and in which the effluent from the hydrodesulphurization step is fractionated by atmospheric distillation into a gaseous fraction, at least one atmospheric distillate fraction containing fuel bases and an atmospheric residue fraction, and at least a portion of the atmospheric residue is then fractionated by vacuum distillation into a vacuum distillate fraction and a vacuum residue fraction.

10. A process according to claim 9, in which a portion of the vacuum residue fractions and/or atmospheric residue and/or vacuum distillate is recycled to the hydrodemetallization step a) and/or to the hydrocracking step b).

11. A process according to claims 9 and 10, in which at least a portion of at least one of the naphtha, kerosene and/or diesel type hydrocarbon fractions is recycled to the hydrodemetallization step a).

12. A process according to claims 9 to 11 in which at least a portion of the atmospheric residue and/or vacuum distillate and/or vacuum residue fractions undergoes separation of sediments and catalyst fines using at least one filter, a centrifuging system or in-line decanting.

13. A process according to claims 9 to 12, in which the atmospheric residue and/or the vacuum distillate and/or the vacuum residue are mixed with fluxing bases selected form light cycle oils from catalytic cracking, heavy cycle oils from catalytic cracking, a catalytic cracking residue, kerosene, gas oil, vacuum distillate and/or a decanted oil.

14. A process according to claims 9 to 13, in which at least a portion of the vacuum distillate fraction and/or the vacuum residue fraction is sent to a catalytic cracking section termed step f), in which it is treated under conditions which can produce a gas oil fraction (or light cycle oil LCO) and/or a residual fraction (containing heavy cycle oil, HCO).

15. A process according to claim 13, in which the fluxing bases are selected from kerosene, gas oil and/or vacuum distillate obtained in the separation step e) of the process after hydrodesulphurization.

16. A process according to claim 14, in which the atmospheric residue and/or the vacuum distillate and/or the vacuum residue are mixed with fluxing bases selected from a gas oil fraction (or light cycle oil, LCO) and/or a residual fraction (containing heavy cycle oil, HCO) obtained in the catalytic cracking step f).

Figure 1

Figure 2

## RÉFÉRENCES CITÉES DANS LA DESCRIPTION

**Documents brevets cités dans la description**

- EP 1600491 A
- FR 2950072
- EP 113297 A
- EP 113284 A
- US 5221656 A
- US 5827421 A
- US 7119045 B
- US 5622616 A
- US 5089463 A
- FR 2940143
- FR 2681871
- FR 2784687
- EP 1343857 A
- FR 2889973
- JP 2289419 A
- EP 0384186 A
- JP 2966985 B
- JP 2908959 B
- JP 1049399 A
- JP 61028717 A
- US 4446008 A
- US 4622127 A
- US 6342152 B
- EP 0537500 A
- EP 0622118 A
- US 6589908 B
- US 4818743 A
- US 6332976 B
- US 4695370 A
- EP 184517 A
- US 4959334 A
- EP 323297 A
- US 4965232 A
- US 5120691 A
- US 5344554 A
- US 5449496 A
- EP 485259 A
- US 5286690 A
- US 5324696 A
- EP 542604 A
- EP 699224 A